# FASCICULE DE BREVET EUROPEEN

(11) **EP 1 319 588 B1**
(45) Date de publication et mention de la délivrance du brevet: **16.05.2007**
(21) Numéro de dépôt: 02292982.2
(22) Date de dépôt: 03.12.2002
(51) Int. Cl.: B62D 53/08, B60P 1/16

(54) **Dispositif d'inclinaison modérée pour véhicule tracté**
Kleinwinkelkippsystem für ein Anhängerfahrzeug
Low angle tipping system for a towed vehicle

(30) Priorité: 04.12.2001 FR 0115648
(43) Date de publication de la demande: 18.06.2003
(73) Titulaire: ETABLISSEMENTS MAGYAR S.A., 21004 Dijon Cedex (FR)
(72) Inventeur: Magyar, Georges, c/o Etablissements Magyar S.A., 21004 Dijon Cédex (FR)
(74) Mandataire: Breese, Pierre

(56) Documents cités:
- EP-A- 0 811 545
- DE-U- 9 013 127
- FR-A- 1 056 084
- FR-A- 1 193 008
- US-A- 5 785 341

## Description

La présente invention se rapporte au domaine de l'inclinaison modérée de véhicules tractés, du type citernes, destinés au transport de produits pâteux, pulvérulents, visqueux ou liquides, afin de permettre leur vidange totale.

La présente invention concerne un dispositif d'inclinaison modérée d'un véhicule tracté, du type citerne, destiné au transport de produits pâteux, pulvérulents, visqueux ou liquides, présentant un châssis et muni, à sa partie avant, d'un dispositif d'attelage comportant une plaque d'attelage, ainsi qu'un véhicule tracté équipé dudit dispositif d'inclinaison modérée.

On connaît déjà dans l'état de la technique des dispositifs d'inclinaison modérée.

On connaît notamment la demande de brevet européen EP 811 545. Ce document décrit un dispositif de levage du type défini ci-dessus, constitué de deux plaques entre lesquelles est interposé un moyen pour commander le basculement du châssis, ledit moyen pour commander le basculement étant formé par un coussin pneumatique ou un vérin, intercalé entre lesdites plaques, lesdites plaques étant reliées par des éléments articulés pour permettre le basculement de la plaque supérieure selon une pluralité de positions dans des plans toujours transversaux, c'est-à-dire contenant un axe transversal.

On connaît également le certificat d'utilité allemand DE 9013127 qui décrit un véhicule tracté comportant un châssis muni à sa partie avant d'une plaque d'attelage basculante, le basculement étant opéré à l'aide d'un vérin horizontal.

On connaît également le brevet américain US 4988974 qui décrit non pas un système d'inclinaison modérée d'un véhicule tracté, mais un système d'inclinaison forte à l'aide d'un vérin télescopique incliné, à fort débattement.

L'objet de la présente invention est de proposer une solution efficace pour faciliter l'écoulement de matières pulvérulentes ou visqueuses sans surcoût important, et sans utilisation d'équipements lourds sur le châssis de la citerne.

A cet effet, la présente invention est du type décrit ci-dessus et elle est remarquable, dans son acception la plus large, en ce que le dispositif d'inclinaison modérée est constitué d'un caisson, solidaire dudit châssis, en ce que ladite plaque d'attelage est montée mobile en rotation selon un axe A situé à l'extrémité inférieure arrière dudit caisson et en ce que ladite plaque d'attelage comporte un moyen de levage positionné à l'extrémité avant et destiné à coopérer avec ledit caisson.

Ledit moyen de levage est de préférence constitué d'un vérin dont le piston est positionné sur la partie supérieure de ladite plaque d'attelage et dont la tige est destinée à coopérer avec un élément de renfort positionné à l'extrémité supérieure avant, à l'intérieur dudit caisson.

Ledit caisson présente de préférence une paroi avant et une paroi arrière solidaires, respectivement, de renforts annulaires reliés audit châssis.

Ledit axe A est de préférence positionné à l'extrémité inférieure de ladite paroi arrière.

Ledit caisson présente de préférence une paroi supérieure confondue avec l'extrémité inférieure de la citerne.

Le dispositif d'inclinaison modérée comporte également de préférence un limiteur de pression d'huile d'alimentation du moyen de levage.

Ladite plaque d'attelage comporte en outre, de préférence, deux pièces de verrouillage en coin positionnées, chacune à un coin avant de ladite plaque d'attelage et destinées à coopérer avec ledit caisson pour le verrouillage de l'inclinaison en position d'inclinaison nulle.

Le dispositif d'inclinaison modérée comporte également, de préférence, un système de retenu de ladite plaque d'attelage, positionné entre ledit caisson et ladite plaque d'attelage, afin de permettre de retenir la plaque d'attelage lorsque le véhicule tracté n'est pas attelé à un véhicule tracteur.

Ce système de retenu est, de préférence, constitué d'un ressort relié à une extrémité audit caisson ou à ladite plaque d'attelage et à l'autre extrémité à une chaîne reliée respectivement à ladite plaque d'attelage ou audit caisson.

Avantageusement, grâce à l'invention, le dispositif d'inclinaison est à l'abri des projections, notamment d'eau et de poussières venant de la route, lorsque le véhicule est tiré par un véhicule tracteur.

La présente invention se rapporte également à un véhicule tracté, notamment une citerne tractée, destiné au transport de produits pâteux, pulvérulents, visqueux ou liquides, comportant un dispositif d'inclinaison modérée selon l'invention.

Dans tout le présent document, la direction longitudinale considérée est, bien sûr, la direction d'avancement du véhicule.

L'invention sera mieux comprise à la lecture de la description qui suit faisant référence aux dessins annexés relatifs à des exemples non limitatifs de réalisation, où :

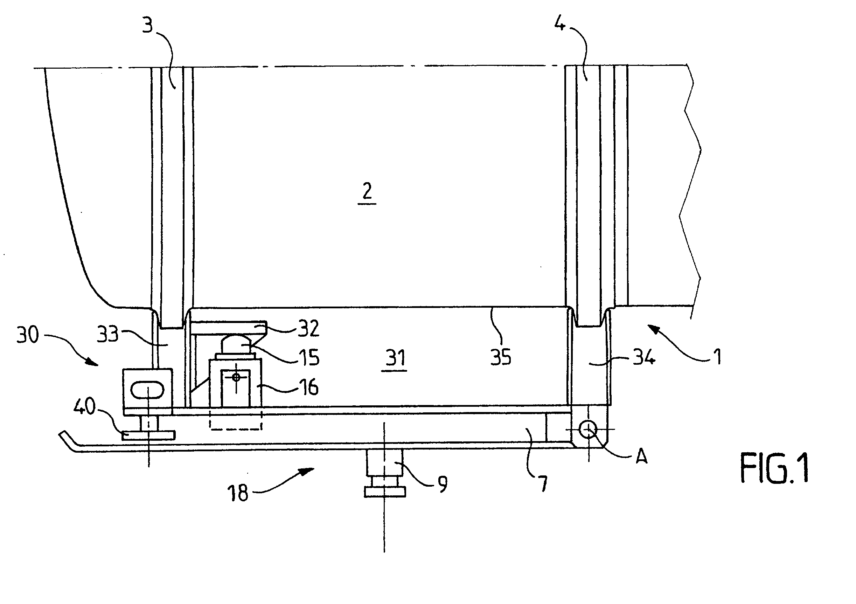

- la figure 1 représente une vue de face d'un dispositif d'inclinaison modérée selon l'invention en position d'inclinaison nulle ;
- la figure 2 représente une vue de face d'un dispositif d'inclinaison modérée selon l'invention en position d'inclinaison modérée ; et
- la figure 3 représente une vue de face d'un dispositif d'inclinaison modérée selon l'invention en position d'inclinaison nulle, avec un système de retenu de la plaque d'attelage.

La présente invention se rapporte à un dispositif (30) d'inclinaison modérée pour véhicule tracté.

Le véhicule tracté, du type citerne (2), est destiné au transport de produits pâteux, pulvérulents, visqueux ou liquides. Le véhicule tracté présente un châssis (1) et est muni, à sa partie avant, d'un dispositif d'attelage (18) comportant une plaque d'attelage (7).

La citerne (2) comporte, un système de remplissage de la citerne, et dans le bas de sa paroi arrière, une bouche de sortie pour la vidange de la citerne par gravitation (non illustrée).

Le châssis (1) du véhicule tracté, ou semi-remorque, supporte de façon connue une citerne (2) par l'intermédiaire de renforts annulaires (3, 4). La plaque d'attelage (7) est munie de manière connue, sur sa face inférieure orientée vers la route, d'un pivot (9) venant coopérer avec une cavité complémentaire prévue dans la sellette d'attelage du véhicule tracteur.

Le dispositif (30) d'inclinaison modérée selon l'invention est caractérisé en ce qu'il est constitué d'un caisson (31), solidaire dudit châssis (1), en ce que ladite plaque d'attelage (7) est montée mobile en rotation selon un axe A situé à l'extrémité inférieure arrière dudit caisson (31) et en ce que ladite plaque d'attelage (7) comporte un moyen de levage (16) positionné à l'extrémité avant et destiné à coopérer avec ledit caisson (31).

Le caisson (31) peut ainsi basculer entre une position de repos dans laquelle il est parallèle au sol, et une position inclinée dans laquelle il présente un angle maximum par rapport au sol inférieur à 15°. La première position correspond notamment à la position "route", et la deuxième position au basculement pour la vidange complète de la citerne. Une inclinaison d'environ 4° suffit souvent pour permettre une vidange complète de la citerne.

L'axe transversal A est positionné en arrière du pivot (9), à l'extrémité arrière de la plaque d'attelage (7).

Le caisson (31) présente une paroi avant (33), une paroi arrière (34) et une paroi supérieure (35) confondue avec l'extrémité inférieure de la citerne (2). Le caisson (31) est refermé, dans sa partie inférieure, par la plaque d'attelage (7) lorsque le dispositif (30) d'inclinaison modérée est en position d'inclinaison nulle.

L'axe A est positionné à l'extrémité inférieure de la paroi arrière (34).

Les parois avant (33) et arrière (34), ainsi que les parois latérales du caisson (31) sont renforcées, afin d'offrir une grande rigidité.

Les parois avant (33) et arrière (34) sont solidaires, respectivement, de renforts annulaires (3, 4) reliés audit châssis (1), de façon à augmenter la résistance du caisson au soulèvement par le moyen de levage (16). Les faces supérieures des parois avant (33) et arrière (34) sont semi-circulaires, afin d'épouser parfaitement la forme semi-circulaire de la paroi de la citerne. Toutes les parois du caisson (31) sont doublées.

Le moyen de levage (16) est de préférence constitué d'un vérin positionné verticalement dont le piston est fixé rigidement par soudure sur la face supérieure de la plaque d'attelage (7), perpendiculairement à cette dernière, et dont la tige (15) est destinée à coopérer avec un élément de renfort (32) positionné à l'extrémité supérieure avant, à l'intérieur dudit caisson (31).

Lorsque la tige (15) est sortie, elle agit sur le renfort (32) du caisson (31), et en action d'extension, écarte ainsi le caisson (31) de la plaque d'attelage (7), provoquant une élévation de l'avant du châssis et un basculement de la citerne selon l'axe A.

Le renfort (32) est constitué par une plaque transversale horizontale soudée à l'intérieur du caisson (31).

Le dispositif d'inclinaison modérée peut comporter également un limiteur de pression d'huile d'alimentation du moyen de levage (16), afin de n'autoriser le levage qu'en fin de vidange, lorsque le poids de produit restant à vidanger n'est pas supérieur à une limite fixée.

La plaque d'attelage (7) comporte en outre deux pièces de verrouillage en coin (40), du type « twist lock », utilisé pour arrimer les conteneurs, positionnées, chacune à un coin avant de ladite plaque d'attelage (7) et destinées à coopérer avec ledit caisson (31) pour le verrouillage de l'inclinaison en position d'inclinaison nulle. Ces pièces de verrouillage en coin (40) aident également au guidage du caisson (31) lors du retour de la citerne à une inclinaison nulle.

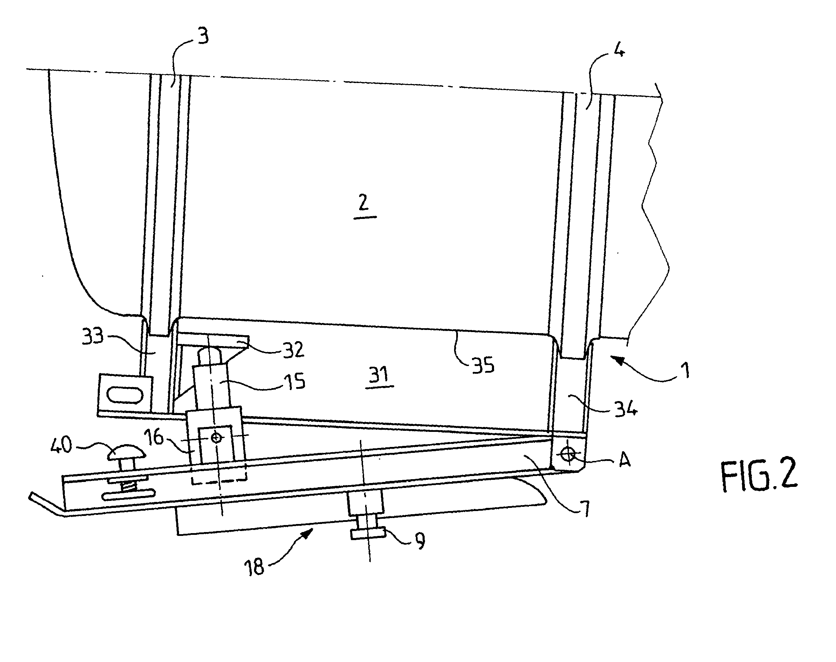

La figure 2 représente la citerne en position inclinée pour sa vidange complète.

Le dispositif de basculement comporte deux éléments : d'une part le caisson (31) et d'autre part la plaque d'attelage (7), mobiles l'un par rapport à l'autre selon l'axe transversal A.

Le basculement relatif est réalisé à l'aide d'un d'un vérin pneumatique dont le piston est positionné sur la partie supérieure de ladite plaque d'attelage (7) et dont la tige (15) est destinée à coopérer avec l'élément de renfort (32) positionné à l'extrémité supérieure avant, à l'intérieur dudit caisson (31).

Le basculement relatif peut également être réalisé à l'aide d'un coussin pneumatique intercalé entre le renfort (32) du caisson (31), et en position d'extension, écarte ainsi le caisson (31) de la plaque d'attelage (7).

La mise sous pression provoque le déplacement du caisson (31) qui prend une angulation fonction du basculement souhaité du châssis de la citerne.

Un basculement de quelques degrés peut suffire à vider complètement la citerne.

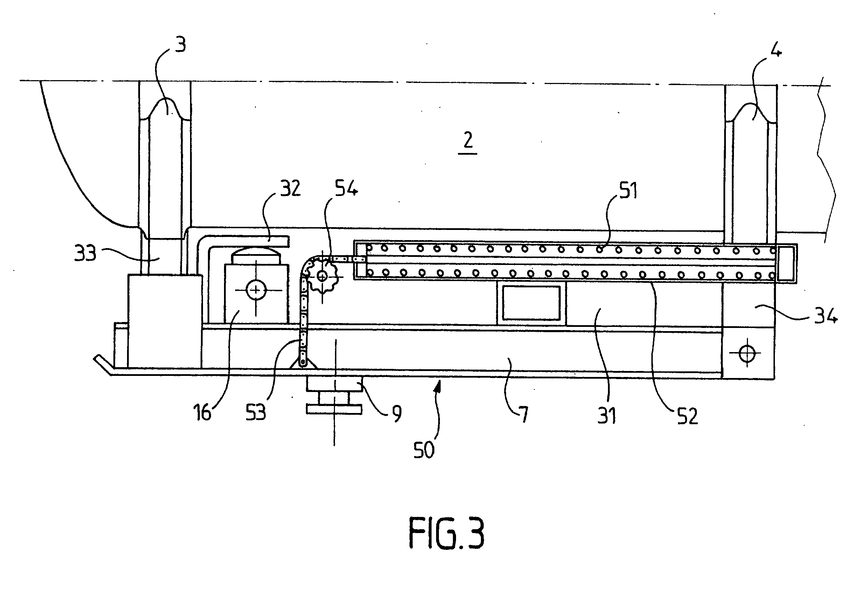

La figure 3 illustre le système de retenu (50) de sécurité qui retient la plaque d'attelage (7) lorsque la remorque n'est pas attelée au véhicule tracteur. Ce système est positionné entre le caisson (31) et ladite plaque d'attelage (7) et évite que la plaque d'attelage (7) ne soit poussée vers le bas lorsque la sellette d'attelage du véhicule tracteur n'est pas positionnée dessous.

Ce système de retenu (50) est constitué d'un ressort (51) hélicoïdal, positionné dans un tube (52) et d'une chaîne (53) montée en rotation libre sur un pignon (54).

Dans la version illustrée, le ressort (51) est horizontal et est relié, à une extrémité, à la paroi arrière (34) du caisson (31) et à l'autre extrémité à une extrémité de la chaîne (53) dont l'autre extrémité est reliée à ladite plaque d'attelage (7). Le pignon (54), dont l'axe est horizontal, transversal, effectue un renvoi d'angle.

Il est également possible d'imaginer que le ressort (51) soit positionné verticalement et soit relié une extrémité à la face supérieure de la plaque d'attelage (7) et à l'autre extrémité à une extrémité de la chaîne (53) dont l'autre extrémité serait reliée à la paroi arrière (34) du caisson (31).

L'invention est décrite dans ce qui précède à titre d'exemple. Il est entendu que l'homme du métier est à même de réaliser différentes variantes de l'invention sans pour autant sortir du cadre du brevet.

## Revendications

1. - Dispositif (30) d'inclinaison modérée d'un véhicule tracté, du type citerne (2), destiné au transport de produits pâteux, pulvérulents, visqueux ou liquides, présentant un châssis (1) et muni, à sa partie avant, d'un dispositif d'attelage (18) comportant une plaque d'attelage (7), **caractérisé en ce qu'**il est constitué d'un caisson (31), solidaire dudit châssis (1), **en ce que** ladite plaque d'attelage (7) est montée mobile en rotation selon un axe A situé à l'extrémité inférieure arrière dudit caisson (31) et **en ce que** ladite plaque d'attelage (7) comporte un moyen de levage (16) positionné à l'extrémité avant et destiné à coopérer avec ledit caisson (31).

2. - Dispositif (30) d'inclinaison modérée selon la revendication 1, **caractérisé en ce que** ledit moyen de levage (16) est constitué d'un vérin dont le piston est positionné sur la partie supérieure de ladite plaque d'attelage (7) et dont la tige (15) est destinée à coopérer avec un élément de renfort (32) positionné à l'extrémité supérieure avant, à l'intérieur dudit caisson (31).

3. - Dispositif (30) d'inclinaison modérée selon la revendication 1 ou la revendication 2, **caractérisé en ce que** ledit caisson (31) présente une paroi avant (33) et une paroi arrière (34) solidaires, respectivement, de renforts annulaires (3, 4) reliés audit châssis (1).

4. - Dispositif (30) d'inclinaison modérée selon la revendication 3, **caractérisé en ce que** ledit axe A est positionné à l'extrémité inférieure de ladite paroi arrière (34).

5. - Dispositif (30) d'inclinaison modérée selon l'une quelconque des revendications précédentes, **caractérisé en ce que** ledit caisson (31) présente une paroi supérieure (35) confondue avec l'extrémité inférieure de la citerne (2).

6. - Dispositif (30) d'inclinaison modérée selon l'une quelconque des revendications précédentes, **caractérisé en ce qu'**il comporte un limiteur de pression d'huile d'alimentation du moyen de levage (16).

7. - Dispositif (30) d'inclinaison modérée selon l'une quelconque des revendications précédentes, **caractérisé en ce que** ladite plaque d'attelage (7) comporte en outre deux pièces de verrouillage en coin (40) positionnées, chacune à un coin avant de ladite plaque d'attelage (7) et destinées à coopérer avec ledit caisson (31) pour le verrouillage de l'inclinaison en position d'inclinaison nulle.

8. - Dispositif (30) d'inclinaison modérée selon l'une quelconque des revendications précédentes, **caractérisé en ce qu'**il comporte un système de retenu (50) de ladite plaque d'attelage (7), positionné entre ledit caisson (31) et ladite plaque d'attelage (7).

9. - Dispositif (30) d'inclinaison modérée selon la revendication 8, **caractérisé en ce que** ledit système de retenu (50) est constitué d'un ressort (51) relié à une extrémité audit caisson (31) ou à ladite plaque d'attelage (7) et à l'autre extrémité à une chaîne (53) reliée respectivement à ladite plaque d'attelage (7) ou audit caisson (31).

10. - Véhicule tracté, notamment citerne (2) tractée, destiné au transport de produits pâteux, pulvérulents, visqueux ou liquides, comportant un dispositif (30) d'inclinaison modérée selon l'une quelconque des revendications précédentes.

## Claims

1. - A moderate inclination device (30) for moderately inclining a towed vehicle of the tanker trailer (2) type serving to transport semi-liquid, powder, viscous, or liquid substances, which towed vehicle has a chassis (1) and is provided, at its front, with a tow device (18) having a tow plate (7), said moderate inclination device being **characterized in that** it is constituted by a box (31) that is secured to said chassis (1), **in that** said tow plate (7) is mounted to move in rotation about an axis A situated at the rear bottom end of said box (31), and **in that** said tow plate (7) is provided with raising means (16) positioned at the front end and serving to co-operate with said box (31).

2. - A moderate inclination device (30) according to claim 1, **characterized in that** said raising means (16) are constituted by an actuator whose piston is positioned on the top portion of said tow plate (7) and whose rod (15) serves to co-operate with a reinforcement element (32) positioned at the front top end, inside said box (31).

3. - A moderate inclination device (30) according to claim 1 or claim 2, **characterized in that** said box (31) has a front wall (33) and a rear wall (34) that are secured to respective ones of annular reinforcements (3, 4) that are connected to said chassis (1).

4. - A moderate inclination device (30), **characterized in that** said axis A is positioned at the bottom end of said rear wall (34).

5. - A moderate inclination device (30) according to any preceding claim, **characterized in that** said box (31) has a top wall (35) that coincides with the bottom end of the tanker trailer (2).

6. - A moderate inclination device (30) according to any preceding claim, **characterized in that** it is further provided with a pressure limiter for limiting the feed oil of the raising means (16).

7. - A moderate inclination device (30) according to any preceding claim, **characterized in that** said tow plate (7) is also provided with two twist-lock type corner locking pieces (40), each of which is placed at a respective front corner of said tow plate (7), which locking pieces serve to co-operate with said box (31) so as to lock the inclination in a zero-inclination position.

8. - A moderate inclination device (30) according to any preceding claim, **characterized in that** it has a retaining system (50) for retaining said tow plate (7), which system is positioned between said box (31) and said tow plate (7).

9. - A moderate inclination device (30) according to claim 8, **characterized in that** said retaining system (50) is constituted by a spring (51) connected at one end to said box (31) or to said tow plate (7), and at its other end to a chain (53) connected respectively to said tow plate (7) or to said box (31).

10. - A towed vehicle, in particular a tanker trailer (2) serving to transport semi-liquid, powder, viscous, or liquid substances, said towed vehicle including a moderate inclination device (30) according to any preceding claim.

## Patentansprüche

1. - Vorrichtung (30) für die mäßige Schrägstellung eines Anhängefahrzeugs vom Typ Kesselwagen (2), der für den Transport von teigartigen, pulverigen, viskosen oder flüssigen Produkten bestimmt ist, ein Fahrgestell (1) aufweist und an seinem vorderen Teil mit einer Kupplungsvorrichtung (18) versehen ist, die eine Kupplungsplatte (7) umfaßt, **dadurch gekennzeichnet, daß** sie aus einem Kasten (31) besteht, der fest mit dem besagten Fahrgestell (1) verbunden ist, und **dadurch**, daß die besagte Kupplungsplatte (7) beweglich in Drehung nach einer Achse A montiert ist, die sich am hinteren unteren Ende des besagten Kastens (31) befindet, und **dadurch**, daß die besagte Kupplungsplatte (7) ein Hebemittel (16) umfaßt, das am vorderen Ende angeordnet und für das Zusammenwirken mit dem besagten Kasten (31) bestimmt ist.

2. - Vorrichtung (30) für die mäßige Schrägstellung nach Anspruch 1, **dadurch gekennzeichnet, daß** das besagte Hebemittel (16) aus einem Arbeitszylinder besteht, dessen Kolben auf dem oberen Teil der besagten Kupplungsplatte (7) positioniert ist, und dessen Stange (15) für das Zusammenwirken mit einem Verstärkungselement (32) bestimmt ist, das am vorderen oberen Ende im Innern des besagten Kastens (31) positioniert ist.

3. - Vorrichtung (30) für die mäßige Schrägstellung nach Anspruch 1 oder Anspruch 2, **dadurch gekennzeichnet, daß** der besagte Kasten (31) eine Vorderwand (33) und eine Hinterwand (34) aufweist, die jeweils fest mit ringförmigen Verstärkungen (3, 4) verbunden sind, die ihrerseits mit dem besagten Kasten (1) verbunden sind.

4. - Vorrichtung (30) für die mäßige Schrägstellung nach Anspruch 3, **dadurch gekennzeichnet, daß** die besagte Achse A am unteren Ende der besagten Hinterwand (34) positioniert ist.

5. - Vorrichtung (30) für die mäßige Schrägstellung nach einem beliebigen der vorstehenden Ansprüche, **dadurch gekennzeichnet, daß** der besagte Kasten (31) eine obere Wand (35) aufweist, die mit dem unteren Ende des Kessels (2) verbunden ist.

6. - Vorrichtung (30) für die mäßige Schrägstellung nach einem beliebigen der vorstehenden Ansprüche, **dadurch gekennzeichnet, daß** sie einen Druckbegrenzer für das Versorgungsöl des Hebemittels (16) umfaßt.

7. - Vorrichtung (30) für die mäßige Schrägstellung nach einem beliebigen der vorstehenden Ansprüche, **dadurch gekennzeichnet, daß** die besagte Kupplungsplatte (7) ferner zwei Eckverriegelungsteile (40) umfaßt, die jeweils an einer vorderen Ecke der besagten Kupplungsplatte (7) positioniert sind und für das Zusammenwirken mit dem besagten Kasten (31) bei der Verriegelung der Schrägstellung in Position Null Schrägstellung bestimmt sind.

8. - Vorrichtung (30) für die mäßige Schrägstellung nach einem beliebigen der vorstehenden Ansprüche, **dadurch gekennzeichnet, daß** sie ein Rückhaltesystem (50) für die besagte Kupplungsplatte (7) umfaßt, das zwischen dem besagten Kasten (31) und der besagten Kupplungsplatte (7) positioniert ist.

9. - Vorrichtung (30) für die mäßige Schrägstellung nach Anspruch 8, **dadurch gekennzeichnet, daß** das besagte Rückhaltesystem (50) aus einer Feder (51) besteht, die mit einem Ende am besagten Kasten (31) oder mit der besagten Kupplungsplatte (7) verbunden ist und mit dem anderen Ende an eine Kette (53), die mit der besagten Kupplungsplatte (7) oder mit dem besagten Kasten (31) verbunden ist.

10. - Anhängefahrzeug, insbesondere ein Kesselwagen (2), der für den Transport von teigartigen, pulverigen, viskosen oder flüssigen Produkten bestimmt ist, und der eine Vorrichtung (30) für die mäßige Schrägstellung nach einem beliebigen der vorstehenden Ansprüche umfaßt.
